(19) Europäisches Patentamt / European Patent Office / Office européen des brevets

(11) **EP 4 184 298 B1**

(12) **EUROPEAN PATENT SPECIFICATION**

(45) Date of publication and mention of the grant of the patent:
**20.05.2026 Bulletin 2026/21**

(21) Application number: **21852719.0**

(22) Date of filing: **30.07.2021**

(51) International Patent Classification (IPC):
**G06F 3/048** (2013.01)    **G06F 3/14** (2006.01)
**G06F 9/445** (2018.01)    **G06F 9/451** (2018.01)

(52) Cooperative Patent Classification (CPC):
**G06F 1/1698; G06F 1/1626; G06F 1/1694;
G06F 3/016; G06F 3/033; G06F 3/0346;
G06F 3/03541; G06F 3/03547; G06F 3/038;
G06F 3/0488; G06F 3/04886; G06F 9/445**

(86) International application number:
**PCT/CN2021/109637**

(87) International publication number:
**WO 2022/028324 (10.02.2022 Gazette 2022/06)**

(54) **METHOD AND APPARATUS FOR STARTING APPLICATION, AND ELECTRONIC DEVICE AND MEDIUM**

VERFAHREN UND VORRICHTUNG ZUM STARTEN EINER ANWENDUNG SOWIE ELEKTRONISCHE VORRICHTUNG UND MEDIUM

PROCÉDÉ ET APPAREIL DE LANCEMENT D'APPLICATION, DISPOSITIF ÉLECTRONIQUE ET SUPPORT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.08.2020   CN 202010779550
31.08.2020   CN 202010899131**

(43) Date of publication of application:
**24.05.2023 Bulletin 2023/21**

(73) Proprietor: **Huawei Technologies Co., Ltd.
Shenzhen, Guangdong 518129 (CN)**

(72) Inventors:
• **HOU, Weibo**
  **Shenzhen, Guangdong 518129 (CN)**
• **WANG, Shuai**
  **Shenzhen, Guangdong 518129 (CN)**
• **YANG, Zicheng**
  **Shenzhen, Guangdong 518129 (CN)**
• **MIN, Xiang**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(56) References cited:
CN-A- 103 138 808    CN-A- 104 516 697
CN-A- 105 487 804    CN-A- 106 648 505
US-A1- 2020 106 877    US-A1- 2020 220 963

## Description

### TECHNICAL FIELD

This application relates to the field of multi-device collaboration, and specifically, to a method and an apparatus for starting an application, an electronic device, and a medium.

### BACKGROUND

With rapid development of Internet technologies and electronic information technologies, multi-device collaboration plays an increasingly important role in mobile office and smart home scenarios. For example, during multi-device collaborative office, a mobile phone is connected to a notebook computer, and content displayed on a screen of the mobile phone is synchronously displayed on the notebook computer.

In a conventional multi-device collaborative office process, through a network connection between a notebook computer and a mobile phone, content displayed on the mobile phone is synchronously displayed on a display of the notebook computer. However, this multi-device collaborative manner has a single function and a single application scenario. US 2020/106877 A1 discloses that mobile device can include ranging circuitry to determine distance to another mobile device. A first wireless protocol can establish an initial communication session to perform authentication and/or exchange ranging settings. A second protocol can perform ranging, and other wireless protocols can transmit content. In one example, the distance information can be used to display a relative position of another device on a user interface of a sending device. The distance information obtained from ranging can be used to trigger a notification (e.g., a reminder) to be output from a first mobile device or used to display a visual indicator on a receiving device. CN 103 138 808 A discloses an information processing method, a device and equipment. The information processing method, the device and the equipment are applied to first equipment. The first equipment is at least provided with a sensor. The information processing method includes that when a distance between the first equipment and second equipment is shorter or equal to a first preset distance, the first equipment uses the sensor to detect a contact position of the second equipment with first terminal equipment. A first information processing order is generated based on the position. Operation indicated by the first information processing order is executed. The information processing method, the device and the equipment can simply, accurately and conveniently achieve information procession, avoid the complicated software arrangement manner in the prior art, processing efficiency is high and a processing manner is natural and can be easily accepted by a user.

## SUMMARY

The invention is defined by the independent claims. Preferable embodiments are defined by the dependent claims.
This application provides a method and an apparatus for starting an application, an electronic device, a computer-readable storage medium, and a computer program product, to enrich functions and scenarios, and improve interaction experience in a multi-device collaboration process.

According to a first aspect, a method for starting an application is provided, including: A first device determines a relative location relationship between the first device and a second device; and the first device starts a target application (Application, app) based on the relative location relationship.

The first device may perceive the relative location relationship between the first device and the second device by using an ultra wideband (ultra wideband, UWB) positioning technology, Bluetooth positioning, or wireless fidelity (wireless fidelity, Wi-Fi) positioning. When the relative location relationship between the first device and the second device meets a preset condition, the first device may start, based on the relative location relationship, a target app corresponding to the relative location relationship. When a location relationship between the two devices is different, an interaction manner of the two devices also changes accordingly. Compared with a conventional fixed interaction manner, the method provided in this application has a more flexible device interaction effect, and can provide richer interaction experience for a user.

Optionally, the first device determines the relative location relationship between the first device and the second device by using the UWB positioning technology. The UWB positioning technology has higher precision and better performance, and is more applicable to an indoor scenario.

A plane on which a screen of the second device is located is an XOY plane. When the relative location relationship is a first relative location relationship, the target app is an app other than a file transfer app, and the first relative location relationship includes that a Z-axis distance between the first device and the second device is less than or equal to a distance threshold; or when the relative location relationship is a second relative location relationship, the target app is a file transfer app, and the second relative location relationship includes that a Z-axis distance between the first device and the second device is greater than the distance threshold.

When the distance between the first device and the second device in a Z-axis direction is less than or equal to the preset distance threshold, it may be determined that the first device and the second device are basically located on a same plane, and the first device approaches or moves away from the second device from all directions in the plane on which the screen of the second device is located. In this case, the user usually expects the first device and the second device to perform interaction such as screen extension or displaying a virtual keyboard. Therefore, the first device may start an app corresponding to a specific direction, for example, a screen extension app or a keyboard app. The distance threshold may be a small value, and is used to restrict whether two terminal devices are approximately located on a same plane. When the relative location relationship is that the distance between the first device and the second device in a Z-axis direction is greater than the distance threshold, it is determined that the first device and the second device are not on the same plane. For example, the user holds the first device to approach to the second device but keeps a long distance from the second device. In this case, the user usually expects the first device and the second device to perform file transfer. Therefore, the first device may start a file transfer app. The foregoing embodiment can provide an interaction function that meets requirements of the user, and provide richer interaction experience for the user.

Optionally, the second device includes a long side and a short side, and the first relative location relationship further includes that the first device approaches the second device from the short side. The target app includes: a screen extension app, a projection app, or a mouse app.

For example, the screen of the second device is a rectangular screen. The first device approaches the second device from the short side means that the first device is located on the left or right of the second device. In this case, there is a high probability that the user expects to enhance a screen display effect of the second device or add a mouse function to the second device. Therefore, the first device may start the screen extension app, the projection app, or the mouse app. The foregoing embodiment can provide an interaction function that meets requirements of the user, and provide richer interaction experience for the user.

Optionally, the second device includes a long side and a short side, and the first relative location relationship further includes that the first device approaches the second device from the long side. The target app includes: a keyboard app or a touchpad app.

For example, the screen of the second device is a rectangular screen. The first device approaches the second device from the long side means that the first device is located below or above the second device. In this case, there is a high probability that the user expects to add an input function to the second device. Therefore, the first device may start the keyboard app or the touchpad app. The foregoing embodiment can provide an interaction function that meets requirements of the user, and provide richer interaction experience for the user.

Optionally, the first relative location relationship further includes that there is an overlapping area between a projection of the first device on the XOY plane and the second device; and the target app includes a wireless charging app.

In this embodiment, in addition to indicating that the distance between the first device and the second device is close, the first relative location relationship further indicates that there is an overlapping area between the projection of the first device on the XOY plane and the second device. In this case, there is a high probability that the first device and the second device are in a stacking state. The user may expect to control the first device and the second device to perform wireless charging. Therefore, the first device may start the wireless charging app when the location relationship between the first device and the second device is the first relative location relationship, to implement wireless charging between the first device and the second device. The foregoing embodiment can provide an interaction function that meets requirements of the user, and provide richer interaction experience for the user.

Optionally, the second relative location relationship may further include that there is an overlapping area between a projection of the first device on the XOY plane and the second device.

In this embodiment, in addition to indicating that the distance between the first device and the second device is long, the second relative location relationship further indicates that there is an overlapping area between the projection of the first device on the XOY plane and the second device. Some users may have a habit action of holding the first device to approach to the second device and keeping a specific distance when performing file transfer. Therefore, the first device may start the file transfer app when the location relationship between the first device and the second device is the second relative location relationship. The foregoing embodiment can provide an interaction function that meets requirements of the user, and provide richer interaction experience for the user.

Optionally, the method further includes: The first device verifies security of the second device, and the first device determines the relative location relationship between the first device and the second device when security verification on the second device succeeds; or after the first device determines the relative location relationship between the first device and the second device, the first device verifies security of the second device, and starts the target app if verification succeeds.

The first device verifies the security of the second device, to avoid data leakage that may be caused by accessing an invalid device, and improve data security.

With reference to the first aspect, in some implementations of the first aspect, the method may further include: The first device obtains indication information entered by the user, where the indication information is used to indicate a correspondence between the relative location relationship and the target app.

When the user enters the indication information, the first device may determine, based on the indication information, a correspondence expected by the user. Therefore, in this embodiment, a personalized adjustment can be performed on a target app starting policy, so that the target app meets an expectation of the user, to further improve interaction experience of the user.

Optionally, the first device may further learn the correspondence between the relative location relationship and the target app based on the indication information.

The first device may use content indicated by the indication information as a real value to train a neural network, and learn the correspondence between the relative location relationship and the target app by using the neural network. The first device learns the correspondence between the relative location relationship and the target app based on the indication information, to obtain a preference of the user and adaptively perform, based on the user preference, the personalized adjustment on the target app starting policy, so as to enable the target app to meet the expectation of the user and further improve interaction experience of the user.

Optionally, the first device may further start the target app based on the relative location relationship between the first device and the second device and a relative location relationship between the first device and a third device.

A trigger condition for starting the target app may not be limited to a relative location relationship between two or three terminal devices, or may be a relative location relationship between more terminal devices, so that interaction scenarios are more abundant. The third device may be a device of a same type as the first device and the second device, or may be a device of a different type. This is not limited in this embodiment of this application.

According to a second aspect, an apparatus for starting an application is provided, including a module that includes software and/or hardware. The unit is configured to perform any method in the technical solution according to the first aspect.

According to a third aspect, an electronic device is provided, including a processor, a memory, and an interface.

The processor, the memory, and the interface cooperate with each other, and the processor is configured to perform any method in the technical solution according to the first aspect.

According to a fourth aspect, a computer-readable storage medium is provided. The computer-readable storage medium stores computer instructions, and when the computer instructions are run on an electronic device or a server, any method in the technical solution according to the first aspect is performed.

According to a fifth aspect, a computer program product is provided. The computer program product includes computer program code, and when the computer program code is run on an electronic device, the electronic device is enabled to perform any method in the technical solution according to the first aspect.

**BRIEF DESCRIPTION OF DRAWINGS**

To explain technical solutions in embodiments of this application more clearly, the following briefly describes accompanying drawings used for describing embodiments or the conventional technology. It is clear that the accompanying drawings in the following descriptions show merely some embodiments of this application, and a person of ordinary skill in the art may still derive other drawings from these accompanying drawings without creative efforts.

FIG. 1 is a schematic diagram of a structure of a terminal device 100 according to an embodiment of this application;
FIG. 2 is a block diagram of a software structure of a terminal device 100 according to an embodiment of this application;
FIG 3 is a schematic flowchart of a method for starting an app according to an embodiment of this application;
FIG. 4 is a schematic diagram of an XOY plane and a Z axis according to an embodiment of this application;
FIG. 5 is a schematic diagram of different apps corresponding to different relative location relationships according to an embodiment of this application;

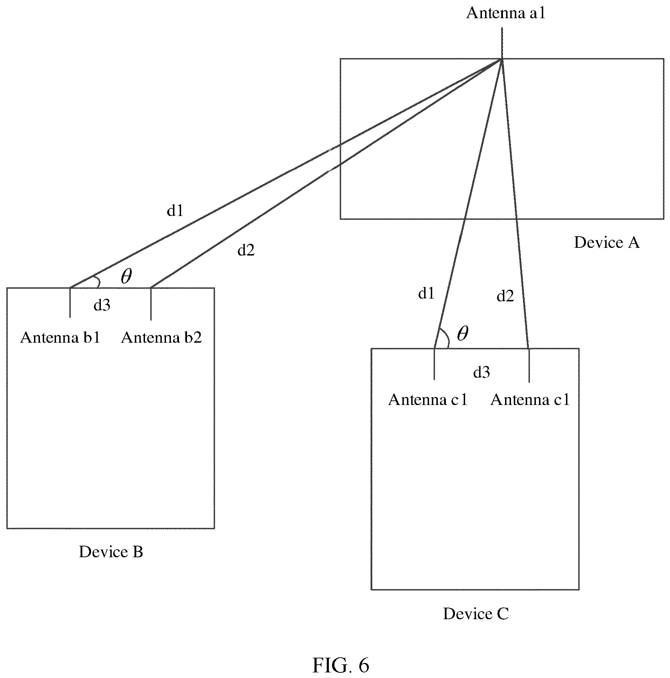

FIG. 6 is a schematic diagram of relationships between distances and angles between different devices and antennas according to an embodiment of this application;
FIG. 7 is a schematic diagram of a relationship between an antenna position and an incident angle of an incident wave according to an embodiment of this application;
FIG. 8 is a schematic diagram of a principle of a relationship between time and acceleration according to an embodiment of this application;
FIG. 9 is a schematic diagram of area division of different relative location relationships according to an embodiment of this application;
FIG. 10 is a schematic diagram of area division of different relative location relationships after adjustment is performed based on FIG. 9 according to an embodiment of this application;
FIG 11 is a schematic flowchart of a method for starting an app according to an embodiment of this application; and
FIG. 12 is a schematic diagram of a structure of an apparatus for starting an app according to an embodiment of this application.

**DESCRIPTION OF EMBODIMENTS**

The following describes the technical solutions in embodiments of this application with reference to the accompanying drawings in embodiments of this application. In the descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of embodiments of this application, "a plurality of" means two or more.

The terms "first", "second", and "third" mentioned below are merely used for a description purpose, and shall not be understood as an indication or implication of relative importance or implicit indication of a quantity of indicated technical features. Therefore, a feature limited by "first", "second", or "third" may explicitly or implicitly include one or more features.

A method for starting an application according to embodiments of this application may be applied to a terminal device such as a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the terminal device and the server is not limited in embodiments of this application.

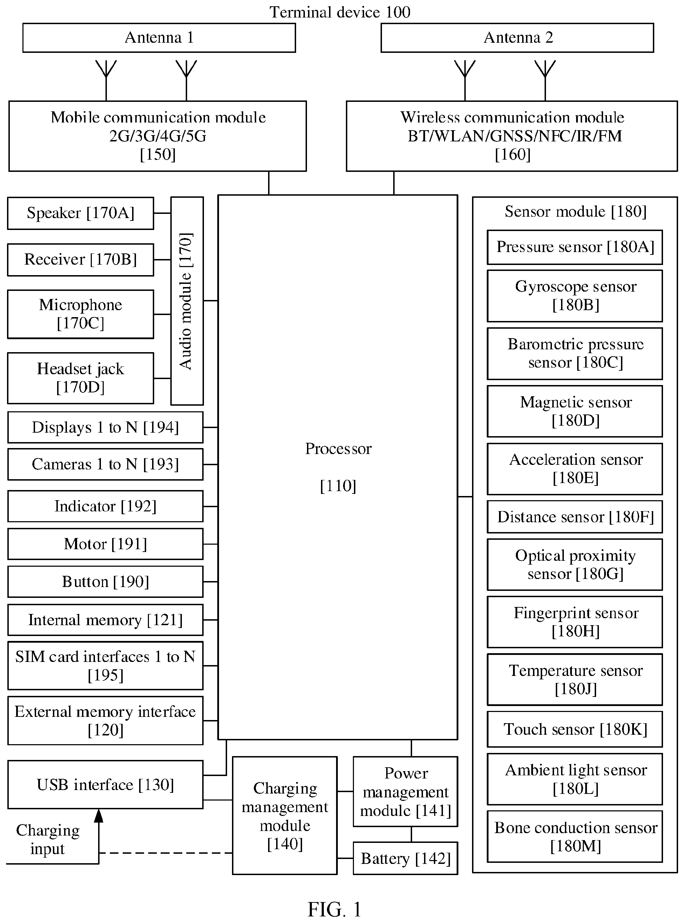

For example, FIG. 1 is a schematic diagram of a structure of a terminal device 100 according to an embodiment of this application. The terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure illustrated in this embodiment of this application does not constitute a specific limitation on the terminal device 100. In some other embodiments of this application, the terminal device 100 may include more or fewer components than those shown in the figure, or some components may be combined, or some components may be split, or there may be a different component layout. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the terminal device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces a waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the terminal device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the terminal device 100. The processor 110 communicates with the display 194 through the DSI, to implement a display function of the terminal device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB Type-C interface, or the like. The USB interface 130 may be configured to connect to a charger to charge the terminal device 100, or may be used to transmit data between the terminal device 100 and a peripheral device, or may be configured to connect to a headset for playing audio through the headset. The interface may be further configured to connect to another terminal device, for example, an AR device.

It may be understood that an interface connection relationship between the modules illustrated in embodiments of this application is merely an example for description, and does not constitute a limitation on a structure of the terminal device 100. In some other embodiments of this application, the terminal device 100 may alternatively use an interface connection manner different from that in the foregoing embodiment, or may use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the terminal device 100. The charging management module 140 supplies power to the terminal device through the power management module 141 while charging the battery 142.

The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the terminal device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Structures of the antenna 1 and the antenna 2 in FIG. 1 are merely examples. Each antenna in the terminal device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the terminal device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the terminal device 100 and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the terminal device 100 are coupled, and the antenna 2 and the wireless communication module 160 in the terminal device 100 are coupled, so that the terminal device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The terminal device 100 implements a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, and the one or more GPUs execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diodes, QLED), or the like. In some embodiments, the terminal device 100 may include one or N displays 194, where N is a positive integer greater than 1.

The terminal device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 may be configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the terminal device 100 may include one or N cameras 193, where N is a positive integer greater than 1.

The digital signal processor is configured to process a digital signal, and may process another digital signal in addition to the digital image signal. For example, when the terminal device 100 selects a frequency bin, the digital signal processor is configured to perform Fourier transform on frequency bin energy.

The video codec is configured to compress or decompress a digital video. The terminal device 100 may support one or more video codecs. In this way, the terminal device 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the terminal device 100 may be implemented through the NPU, for example, image recognition, facial recognition, speech recognition, and text understanding.

The external memory interface 120 may be used to connect to an external memory card, for example, a micro SD card, to extend a storage capability of the terminal device 100. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The processor 110 runs the instructions stored in the internal memory 121, to perform various function applications and data processing of the terminal device 100. The internal memory 121 may include a program storage area and a data storage area. The program storage area may store an operating system, an application required by at least one function (for example, a voice playing function or an image playing function), and the like. The data storage area may store data (for example, audio data and an address book) and the like created when the terminal device 100 is used. In addition, the internal memory 121 may include a high-speed random access memory, or may include a nonvolatile memory, for example, at least one magnetic disk storage device, a flash memory, or a universal flash storage (universal flash storage, UFS).

The terminal device 100 may implement an audio function such as music playing or recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode audio signals. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The terminal device 100 may be used to listen to music or answer a call in a hands-free mode over the speaker 170A.

The receiver 170B, also referred to as an "earpiece", is configured to convert an electrical audio signal into a sound signal. When a call is answered or speech information is received through the terminal device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the terminal device 100. In some other embodiments, two microphones 170C may be disposed in the terminal device 100, to collect a sound signal and implement a noise reduction function. In some other embodiments, three, four, or more microphones 170C may alternatively be disposed in the terminal device 100, to collect a sound signal, implement noise reduction, identify a sound source, implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The terminal device 100 determines pressure intensity based on the change of the capacitance. When a touch operation is performed on the display 194, the terminal device 100 detects intensity of the touch operation by using the pressure sensor 180A. The terminal device 100 may also calculate a touch location based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyroscope sensor 180B may be configured to determine a motion posture of the terminal device 100. In some embodiments, angular velocities of the terminal device 100 around three axes (namely, x, y, and z axes) may be determined by using the gyroscope sensor 180B. The gyroscope sensor 180B may be configured to implement image stabilization during photographing. For example, when a shutter is pressed, the gyroscope sensor 180B detects an angle at which the terminal device 100 jitters, calculates, based on the angle, a distance for which a lens module needs to compensate, and allows the lens to cancel the jitter of the terminal device 100 through reverse motion, to implement image stabilization. The gyroscope sensor 180B may also be used in a navigation scenario or a somatic game scenario.

The barometric pressure sensor 180C is configured to measure barometric pressure. In some embodiments, the terminal device 100 calculates an altitude based on a barometric pressure value measured by the barometric pressure sensor 180C, to assist in positioning and navigation.

The magnetic sensor 180D includes a Hall sensor. The terminal device 100 may detect opening and closing of a flip cover by using the magnetic sensor 180D. In some embodiments, when the terminal device 100 is a flip phone, the terminal device 100 may detect opening and closing of a flip cover based on the magnetic sensor 180D. Further, a feature such as automatic unlocking upon opening of the flip cover is set based on a detected opening or closing state of the flip cover.

An acceleration sensor 180E may detect accelerations of the terminal device 100 in various directions (usually on three axes). A magnitude and a direction of gravity may be detected when the terminal device 100 is still. The acceleration sensor 180E may be further configured to identify a posture of the terminal device, and is used in an application such as switching between a landscape mode and a portrait mode or a pedometer.

The distance sensor 180F is configured to measure a distance. The terminal device 100 may measure the distance in an infrared manner or a laser manner. In some embodiments, in a photographing scenario, the terminal device 100 may measure a distance by using the distance sensor 180F, to implement quick focusing.

The optical proximity sensor 180G may include, for example, a light-emitting diode (LED) and an optical detector, for example, a photodiode. The light-emitting diode may be an infrared light-emitting diode. The terminal device 100 emits infrared light by using the light-emitting diode. The terminal device 100 detects infrared reflected light from a nearby object by using the photodiode. When sufficient reflected light is detected, the terminal device 100 may determine that there is an object near the terminal device 100. When insufficient reflected light is detected, the terminal device 100 may determine that there is no object near the terminal device 100. The terminal device 100 may detect, by using the optical proximity sensor 180G, that the user holds the terminal device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The terminal device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the terminal device 100 is in a pocket, to avoid an accidental touch.

The fingerprint sensor 180H is configured to collect a fingerprint. The terminal device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the terminal device 100 executes a temperature processing policy based on the temperature detected by the temperature sensor 180J. For example, when the temperature reported by the temperature sensor 180J exceeds a threshold, the terminal device 100 lowers performance of a processor located near the temperature sensor 180J, to reduce power consumption for thermal protection. In some other embodiments, when the temperature is lower than another threshold, the terminal device 100 heats the battery 142, to avoid abnormal shutdown of the terminal device 100 caused by a low temperature. In some other embodiments, when the temperature is lower than still another threshold, the terminal device 100 boosts an output voltage of the battery 142, to avoid abnormal shutdown caused by a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided by using the display 194. In some other embodiments, the touch sensor 180K may alternatively be disposed on a surface of the terminal device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The terminal device 100 may receive a button input, and generate a button signal input related to a user setting and function control of the terminal device 100.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or detached from the SIM card interface 195, to implement contact with or separation from the terminal device 100. The terminal device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external memory card. The terminal device 100 interacts with a network through the SIM card, to implement functions such as conversation and data communication. In some embodiments, the terminal device 100 uses an eSIM, that is, an embedded SIM card. The eSIM card may be embedded into the terminal device 100, and cannot be separated from the terminal device 100.

A software system of the terminal device 100 may use a layered architecture, an event-driven architecture, a microkernel architecture, a microservice architecture, or a cloud architecture. In embodiments of this application, an Android system with a layered architecture is used as an example to describe a software structure of the terminal device 100.

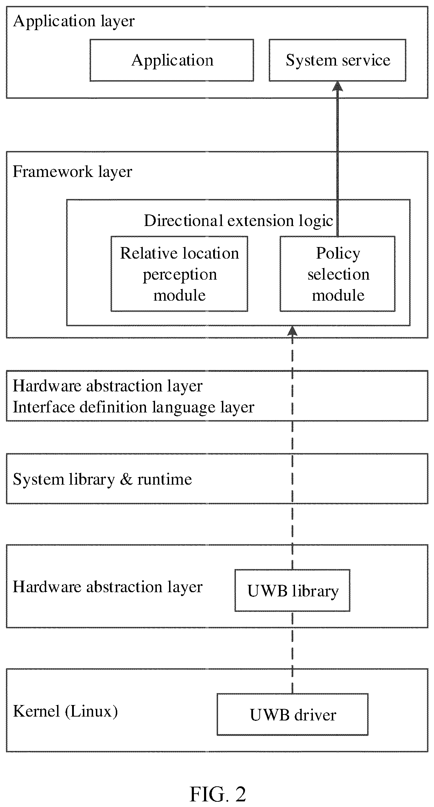

FIG. 2 is a block diagram of a software structure of a terminal device 100 according to an embodiment of this application. In a layered architecture, software is divided into several layers, and each layer has a clear role and task. The layers communicate with each other through a software interface. In some embodiments, the system is divided into four layers: an application layer, an application framework layer, a hardware abstraction layer interface definition language (HAL interface definition language, HIDL) layer, a system library and runtime (runtime), a hardware abstraction layer (Hardware Abstraction Layer, HAL) (including a UWB library) and a kernel (kernel) layer from top to bottom. The kernel layer includes a UWB driver. The application layer may include a series of application packages.

As shown in FIG. 2, the framework layer may include directional extension logic. The directional extension logic may include a relative location perception module, configured to perceive a relative location relationship with another device, and may further include a policy selection module, configured to select an application that needs to be started.

The application framework layer provides an application programming interface (application programming interface, API) and a programming framework for an application at the application layer. The application framework layer includes some predefined functions.

For ease of understanding, in the following embodiments of this application, a terminal device having the structures shown in FIG. 1 and FIG. 2 is used as an example. With reference to the accompanying drawings and application scenarios, a method for starting an application according to this embodiment of this application is described in detail. The application herein may be an app with a display interface, or may be a system service without a display interface. This is not limited in this embodiment of this application.

The method for starting an app in this embodiment of this application may be applied to a multi-device collaboration system including two or more terminal devices, for example, a multi-device collaboration system including three, four, or more terminal devices. A multi-device collaboration system including two terminal devices is first used as an example for description in this embodiment of this application. Herein, the two terminal devices are defined as a first device and a second device separately. The first device and the second device may be, for example, the terminal device 100 shown in FIG. 1, such as a device that has a touchscreen, such as a desktop computer, a tablet computer, a smart phone, or a band. An execution body of this embodiment of this application may be a processor, or may be the first device including a processor. The first device and the second device have corresponding applications. When the first device starts an app, the second device starts a function corresponding to the app started by the first device to interact with the first device, so as to implement multi-device collaboration.

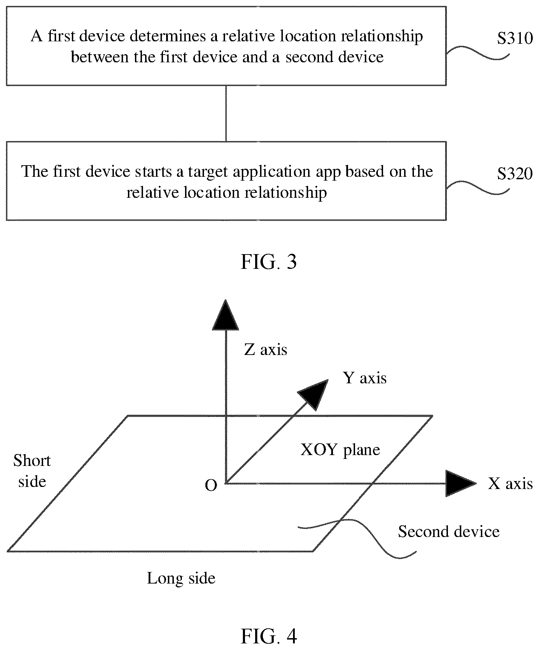

FIG 3 is a schematic flowchart of a method for starting an app according to an embodiment of this application. As shown in FIG. 3, the method includes the following steps.

S310: The first device determines a relative location relationship between the first device and the second device.

When a user holds the first device and approaches the second device, and the first device senses that the second device is within a specific distance range of the first device, the first device starts logic of sensing a relative location relationship between the first device and the second device. The relative location relationship may include a distance between the first device and the second device and/or an included angle between the first device and the second device in a spatial coordinate system; or may alternatively include different location areas divided based on the distance and the included angle. Optionally, the first device may obtain the relative location relationship between the two devices by using Bluetooth positioning or a Wi-Fi positioning technology. Alternatively, the first device may obtain the relative location relationship between the two devices by using a UWB positioning technology. For example, the first device calculates an included angle between the two devices in space based on phase differences of signals received by a plurality of antennas disposed on the first device, and obtains the relative location relationship between the two devices based on the distance obtained through measurement. The first device determines the relative location relationship between the two devices by using the UWB positioning technology. The UWB positioning technology has higher precision and better performance, and is more applicable to an indoor scenario.

Optionally, an area around the second device may be divided into several sub-areas according to a preset rule and marked, to obtain a plurality of relative location relationships. The foregoing relative location relationship may include, but is not limited to, that the first device is located above, below, to the left of, to the right of, at the lower right of, at the upper right of, at the lower left of, at the upper left of, in front of, and behind the second device, or that the first device approaches the second device from all the foregoing directions.

Optionally, the first device may periodically measure a distance between the two devices by using a UWB ranging technology. When the distance is less than a preset distance threshold, steps of determining a relative location relationship between the two devices are performed. The first device may alternatively use Wi-Fi, Bluetooth, or ZigBee to measure the distance between the two devices. In contrast, the UWB ranging method reduces power consumption. Optionally, a distance measurement instruction may be actively triggered by the user. For example, the user taps a distance measurement button on the touchscreen of the first device, or the user performs a corresponding gesture operation on the touchscreen of the first device, for example, sliding from left to right at the bottom of the touchscreen, or the user inputs a voice instruction, for example, "start ranging", to the first device.

Optionally, a periodicity of scanning a distance between the two devices may be further adjusted based on a habit of the user. For example, the user often performs a multi-device collaboration operation during working hours every day, and a scanning periodicity may be shortened, to find a device that needs to be coordinated in a timely manner, and respond more timely. During 18:00 to 20:00 every day, the user may have a dinner or commute, and a scanning periodicity may be increased, to effectively reduce device power consumption.

S320: The first device starts a target app based on the relative location relationship.

Usually, correspondences between different relative location relationships and different apps may be established in advance based on an operation habit or preference of the user, for example, a list of correspondences between relative location relationships and apps is established. Different relative location relationships may represent different intentions of the user. When the relative location relationship meets a preset condition, the first device may search, based on the relative location relationship, an app corresponding to the relative location relationship in the foregoing correspondences, and start the app as a target app.

In the method shown in FIG. 3, the first device may start, based on a determined relative location relationship between two devices, a target app corresponding to the relative location relationship. When the location relationship between the two devices is different, an interaction manner between the devices also changes accordingly. Compared with a conventional fixed interaction manner, the method provided in this application has a more flexible device interaction effect, and can provide richer interaction experience for a user.

In some embodiments, the first device may first verify security of the second device. When verification succeeds, the first device determines that the second device is a secure and valid device, and starts the corresponding target app based on the relative location relationship, to implement multi-device collaboration. During multi-device collaboration, the method may start the target app while ensuring that the second device is legal, to avoid data leakage that may be caused by accessing an illegal device, and improve data security.

An execution sequence of a step for security verification and a step for determining a relative location relationship is not limited in this embodiment of this application. When the step for security verification is performed before the step for determining a relative location relationship, whether two devices can securely exchange data may be determined in advance, and then a target app is started. This can avoid invalid running of another processing procedure caused by a failure in the security verification, and reduces device overheads.

Optionally, a possible implementation process in which the first device verifies the security of the second device may include the following steps.

During ranging, the first device may obtain a device identifier of the second device, and perform verification based on a preset whitelist of devices allowed to be connected. If the device identifier of the second device is in the whitelist, the verification succeeds, and a connection is established between the two devices.

If the device identifier of the second device is not in the whitelist, the first device may compare information about a logged-in account on the first device with information about a logged-in account on the second device. If the account information of the two devices matches, for example, the account information of the two devices indicates that a same user logs in on the two devices, for example, entered fingerprint, facial recognition, entered password, or collected iris information matches, it may be determined that the verification succeeds. If the account information of the two devices does not match, the first device may use a pop-up window to ask the user to confirm whether the verification succeeds and a connection is established. For example, when the account information logged in on the first device and the second device does not match, the first device may control a dialog box to pop up on a screen of the first device or a screen of the second device, to prompt the user whether to allow connection establishment. If the user wants to establish a connection, the user may click an OK button to confirm the connection, and this indicates that the verification succeeds. If the user does not need multi-device collaboration at this time, or considers that the second device is not a device that the user wants to collaborate with, the user may also click a button for canceling connection establishment to exit a current verification procedure.

Optionally, the whitelist may exist in the first device or the second device locally, or may be obtained from a cloud. This is not limited in this embodiment of this application.

In the foregoing verification process, the first device performs security verification in combination with the whitelist, the account information, and the pop-up dialog box, to preferably perform device automatic verification on a premise of ensuring information security, so as to improve verification efficiency, and effectively balance information security and data processing efficiency. This is more equitable.

To describe a relative location relationship between devices in detail, refer to FIG. 4. A plane on which a screen of the second device is located is used as an XOY plane, and a forward direction of the screen perpendicular to the XOY plane is used as a positive direction of a Z axis, to establish a three-dimensional spatial coordinate system.

In some embodiments, the foregoing relative location relationship may include a first relative location relationship and a second relative location relationship. The first relative location relationship indicates that the first device and the second device are located on a same plane, and the second relative location relationship indicates that the first device and the second device are not located on a same plane. Whether two devices are located on a same plane may be determined based on a distance between the two devices in a Z-axis direction.

When a distance between the first device and the second device in the Z-axis direction is less than or equal to a preset distance threshold, it is considered that the two devices are approximately on a same plane. When the first device approaches or moves away from the second device from all directions in the plane on which the screen of the second device is located, the user usually expects the first device and the second device to perform interaction such as screen extension or virtual keyboard displaying. Therefore, the first device may start an app corresponding to a specific direction, for example, an app other than a file transfer app, such as a keyboard app, a touchscreen app, or a projection app. The distance threshold may be a small value, and is used to restrict whether two terminal devices are approximately located on a same plane. When the distance between the first device and the second device in the Z-axis direction is greater than the distance threshold, it is considered that the two devices are not on a same plane. For example, when the user holds the first device to approach the second device but keeps a long distance from the second device, the user usually expects the first device and the second device to perform file transfer. Therefore, the first device may start a sharing app, for example, a file transfer app, to perform file transfer between the first device and the second device. In this embodiment, an intention of the user may be matched based on a Z-axis distance between two devices, to provide an interaction function that meets a requirement of the user, and provide richer interaction experience for the user.

Optionally, if the two devices are not located on a same plane and there is an overlapping area between projections of the two devices on the XOY plane, the two devices are in the second relative location relationship. In addition to indicating that the distance between the first device and the second device is long, the second relative location relationship further indicates that there is an overlapping area between the projection of the first device on the XOY plane and the second device. Some users may have a habit action of holding the first device to approach to the second device and keeping a specific distance when performing file transfer. Therefore, the first device may start the file transfer app when the location relationship between the first device and the second device is the second relative location relationship. The foregoing embodiment can provide an interaction function that meets requirements of the user, and provide richer interaction experience for the user.

In some embodiments, the screen of the second device may be a rectangular screen or an approximately rectangular screen. Herein, for example, the screen of the second device is a rectangular screen. Among two sides that intersect around the screen of the second device, a longer side may be used as a long side, and a shorter side may be used as a short side. For example, refer to the long side and the short side shown in FIG. 4. When the first device approaches the second device from different sides, different apps may be started.

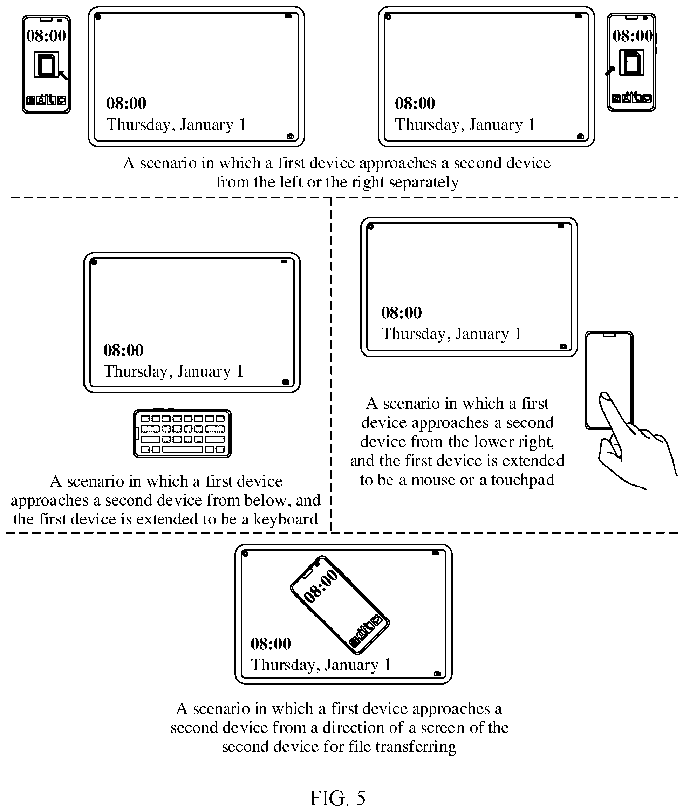

When the first device and the second device are on a same plane and the first device approaches the second device from a short side of the second device, as shown in some scenarios in FIG. 5, the first device is located on the left or right of the second device, there is a high probability that the user expects to enhance a screen display effect of the second device or add a mouse function for the second device. Therefore, the first device may start a screen extension app, a projection app, or a mouse app. The foregoing embodiment can provide an interaction function that meets requirements of the user, and provide richer interaction experience for the user.

Optionally, when the first device starts the screen extension app, screen display content of the first device may fly in from a side of the second device to be displayed on the second device, and the user may further operate the first device by operating a screen area of the first device displayed on the second device. When the first device starts the projection app, displayed content of the first device is displayed on the screen of the second device. When the first device starts the mouse app, virtual left and right mouse keys and a mouse wheel may be displayed on the screen of the first device, and the user uses the first device as a mouse by tapping the screen of the first device and moving a location of the first device.

Optionally, when the first device approaches the second device from a short side of the second device, the first device may determine, based on a preference of the user and an actual hardware configuration, to enable the screen extension app, the projection app, or the mouse app. The first device may learn historical used data of the user, to obtain a usage preference of the user. For example, if an app is frequently used by the user, the first device may start the corresponding app. Alternatively, the first device may perform selection based on a configuration of a peripheral device of the second device. For example, if the second device is not configured with a mouse, the mouse app may be preferably started, or if the second device is configured with a mouse, the screen extension app or the projection app may be preferably started. According to the method, when the first device approaches the second device from a short side of the second device, a corresponding app may be adaptively started with reference to a user preference and a specific configuration of hardware. This method is more automatic and more convenient to use.

When the first device and the second device are on a same plane, and the first device approaches the second device from a long side of the second device, that is, the first device is located below or above the second device, there is a high probability that the user expects to add an input function to the second device. Therefore, the first device may start a keyboard app or a touchpad app, for example, as shown in some scenarios in FIG. 5. When the first device starts the keyboard app, the first device may display distribution of keyboard keys. The user uses the first device as a keyboard by touching keyboard keys displayed on the first device. When the first device starts the touchpad app, the first device may display a handwriting input area and extend the first device to a touchpad, and the user enters an instruction by touching the touchscreen of the first device. During multi-device collaboration, the foregoing embodiment can provide an interaction function that meets requirements of the user, and provide richer interaction experience for the user.

Optionally, when the first device approaches the second device from a long side of the second device, the first device may choose, based on a specific orientation of the first device on the long side, to enable the keyboard app or the touchpad app. For example, refer to some scenarios shown in FIG. 5. When the first device approaches from a right end of the long side, that is, the first device approaches the second device from lower right of the second device, the touchpad app may be started; or when the first device approaches the second device from a middle area of the long side, the keyboard app is started. This manner divides relative location relationships in more detail, and properly combines a usage habit of the user, to improve user experience.

Optionally, the first device may further determine, based on a user preference, an app to be started when the first device approaches the second device from a long side of the second device. If the user uses a keyboard in more cases, the keyboard app may be started. If the user is an elderly person and is used to handwriting, the touchpad app may be started. The first device starts a corresponding app based on the user preference, so that the usage habit of the user may be properly matched, to improve user experience.

In some embodiments, when the first device and the second device are on a same plane, and there is an overlapping area between the projection of the first device on the XOY plane and the second device, that is, the two devices are in the first relative location relationship, in addition to indicating that the first device and the second device are close, the first relative location relationship further indicates that there is an overlapping area between the projection of the first device on the XOY plane and the second device. In this case, there is a high probability that the first device and the second device are in a stacking state, and the user may expect to control the first device and the second device to perform wireless charging. Therefore, the first device starts a wireless charging app. For example, when the first device approaches the second device from a rear of the screen of the second device, and a distance between of the first device and the second device in the Z axis is less than the distance threshold, the first device starts the wireless charging app, to implement wireless charging between devices. The foregoing embodiment can provide an interaction function that meets requirements of the user, and provide richer interaction experience for the user.

In the foregoing embodiment, a corresponding app can be quickly and automatically started based on correspondences between relative location relationships and different apps and the usage habit of the user, to avoid inconvenience caused by manually performing an operation on a display manner of multi-device collaboration, and achieve more convenient and quicker implementation of multi-device collaboration. In addition, because the first device can start corresponding apps based on different relative location relationships, a display differentiation effect is implemented, a new function is further extended, and this meets diversified interaction requirements of a user, and provides richer interaction experience for the user.

Optionally, the user may input indication information to the first device, and the first device may determine, based on the indication information, a correspondence between a relative location relationship expected by the user and a target app, to modify an app starting policy. When the first device approaches the second device from different directions, in this embodiment, personalized adjustment can be performed on the target app starting policy, so that the target app meets an expectation of the user, and interaction experience of the user is further improved.

Optionally, the first device may use content indicated by the indication information as a real value to train a neural network, and learn the correspondence between the relative location relationship and the target app by using the neural network. For example, when the first device is located below the second device, the user closes an app 1 that uses the first device as a keyboard, but opens an app 2 that uses the first device as a game controller. By performing such operations for a plurality of times, the second device learns that the user prefers to use the first device as a game controller. Therefore, a correspondence between the relative location relationship of "below" and the app 1 may be canceled, and a correspondence between the relative location relationship of "below" and the app 2 may be established. In the method, a user preference is learned, to implement personalized adjustment of the foregoing app starting policy, so that the target app meets an expectation of the user, and interaction experience of the user is further improved.

In some embodiments, a trigger condition for starting the target app may not be limited to a relative location relationship between two or three terminal devices, or may be a relative location relationship between more terminal devices, so that interaction scenarios are more abundant. For example, when the first device approaches fronts of screens of the second device and a third device, the first device starts a sharing app between a plurality of devices, to transfer a file of the first device to the second device and the third device. The third device may be a device of a same type as the first device and the second device, or may be a device of a different type. This is not limited in this embodiment of this application. Optionally, for a method for determining a relative location relationship between the first device and the third device, refer to the method for determining a relative location relationship between the first device and the second device described in this embodiment of this application. Details are not described herein again.

Optionally, the determining a relative location relationship between two devices by using an UWB technology may be implemented based on two antenna structures. For example, a multi-device system includes a first device and a second device. The two antenna structures may be disposed on the first device or the second device. Herein, that the two antenna structures are disposed on the second device is used as an example for description.

In a first antenna structure, three antennas perpendicular to each other are disposed on the second device. Herein, a direction of a long side of a screen of the second device may be used as an X-axis direction, a direction of a short side may be used as a Y-axis direction, a midpoint of the screen of the second device may be used as an origin O, and a positive direction perpendicular to the screen of the second device is used as a Z-axis direction, to establish a three-dimensional spatial coordinate system, as shown in FIG. 4. The first device has at least one antenna. A setting direction of the antenna of the first device is not limited in this embodiment of this application.

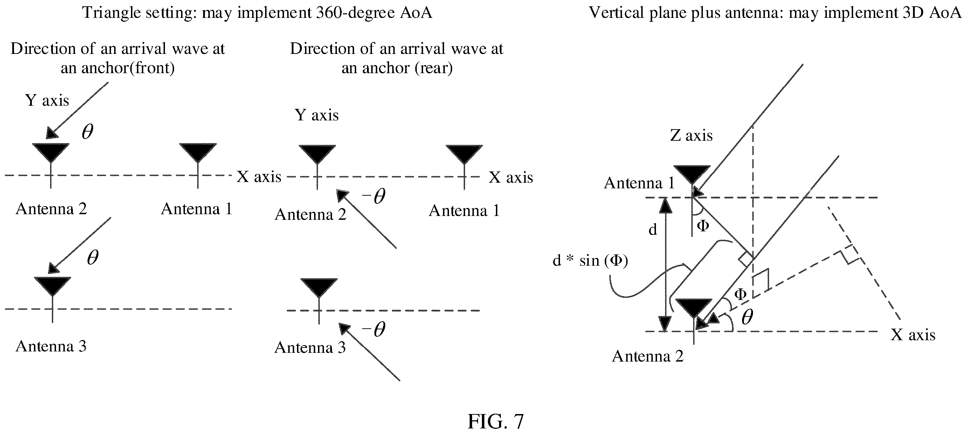

Herein, with reference to an incident direction of an arrival wave and location setting of antennas shown in FIG. 7, an example of how to obtain a relative location relationship between two devices is described: $\theta$ or -$\theta$ is obtained through calculation based on a measured phase difference between an antenna a and an antenna c by using a phase difference formula such as $\varphi_1 = 2\pi d$ $\sin(\theta / \lambda)$ or $\varphi_1 = 2\pi d \sin(-\theta / \lambda)$. $\theta$ and -$\theta$ shown in FIG. 7 are projection angles of an incident angle on an XOY plane, $\phi$ and -$\phi$ are projection angles of the incident angle on an XOZ plane, d is a distance between any two antennas known to the first device, $\lambda$ is a wavelength of an incident wave, and $\varphi_1$ is a phase difference between the antenna a and the antenna c. Herein, the three antennas are perpendicular to each other. Therefore, the projection angle of the incident angle of the arrival wave on the plane on which the two antennas are located may be obtained by using the planes on which any two antennas are located. Alternatively, $\phi$ or -$\phi$ may be obtained through calculation by using the formula $\varphi_2 = 2\pi d$ $\sin(\phi / \lambda)$ or $\varphi_2 = 2\pi d \sin(-\phi / \lambda)$ based on a measured phase difference between the antenna a and an antenna b, and an angle between the first device and the second device may be obtained based on the foregoing $\theta$ or -$\theta$ and $\phi$ or -$\phi$. Then, the foregoing relative location relationship is obtained with reference to the distance between the two devices obtained by UWB ranging. Based on a case in which three antennas are perpendicular to each other, the method uses the UWB technology and combines a trigonometric function relationship to implement accurate and fast positioning of the relative location relationship between the two devices, implements accurate starting of an app in multi-device collaboration, and improves user experience.

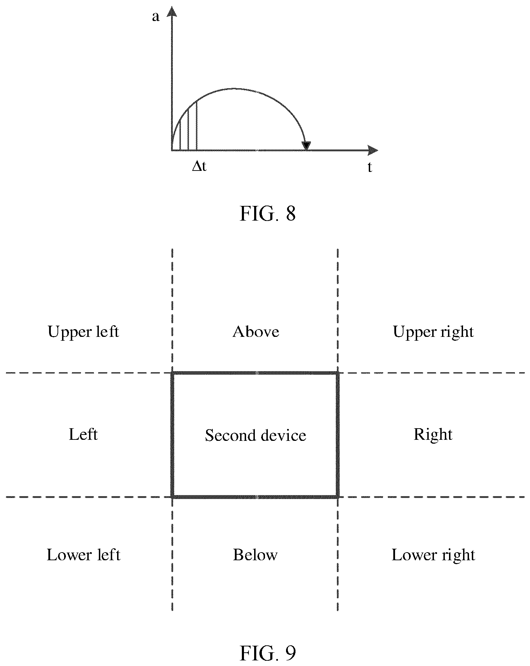

In a second antenna structure, two antennas perpendicular to each other are disposed on the second device. Herein, a direction of a long side of a screen of the second device may be used as an X-axis direction, a direction of a short side may be used as a Y-axis direction, a midpoint of the screen of the second device may be used as an origin O, and a positive direction perpendicular to the screen of the second device is used as a Z-axis direction, to establish a three-dimensional spatial coordinate system. The first device has at least one antenna. A direction of the antenna of the first device is not limited in this embodiment of this application. Based on a principle shown in FIG. 7, a relative location of the two devices projected on the XOY plane can be obtained first, and a Z-axis distance of the first device in a direction perpendicular to the XOY plane is obtained based on data of a device (inertial measurement unit, IMU) that measures a three-axis attitude angle and an acceleration of an object, to obtain the relative location relationship between the two devices. Optionally, in a manner of obtaining the Z-axis distance by using the IMU data, a moving acceleration a of the first device may be measured based on a sensor. According to a relationship between acceleration and time shown in FIG. 8, a distance s that the first device moves relative to the second device in the Z-axis direction is obtained by using a formula $s = \int \frac{1}{2} a (\Delta t)^2 dt$ , and then the current Z-axis distance between the two devices is obtained with reference to an initial Z-axis distance between the two devices. The initial Z-axis distance between the two devices may be that when the second device senses that the first device enters a sensing range, the sensing range of the first device is used as the initial Z-axis distance, or may be a read initial Z-axis distance sensed by another sensor. A manner of obtaining the initial Z-axis distance is not limited in this embodiment of this application. In the method, when the second device has a structure in which two antennas are perpendicular to each other, UWB ranging and IMU data are used in a combined manner to accurately locate the relative location relationship between the two devices, so this method does not depend on a third antenna of the second device. In addition to accurate and quick positioning, this method is applicable to a wider range of scenarios.

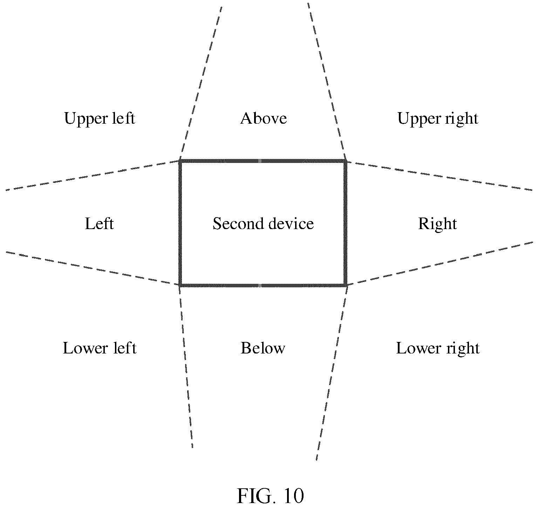

In some embodiments, the first device pre-establishes correspondences between different relative location relationships and different apps based on usage habits of most users. For example, an area around the second device may be divided as shown in FIG. 9, and a front may be an orientation (not shown in the figure) of a screen of the second device, and a rear may be an orientation of a rear housing of the second device (not shown in the figure). Optionally, area division of the foregoing relative location relationships may further be adaptively adjusted based on usage habits of different users. For area division shown in FIG. 9, sometimes, when using a first device in a lower right area in FIG. 9, a user starts an app that uses the first device as a mouse. An operation such as moving the "mouse" may occur in a use process, so a distance between the first device and a wide side or a long side of a second device may be close. However, in this case, the user usually does not expect to switch the started app, and the area division shown in FIG. 9 may be adjusted. An adjusted area division may be shown in FIG. 10. In the method, a usage habit of the user is obtained or learned, and personalized correction of area division around the second device is implemented, to further improve interaction experience of the user.

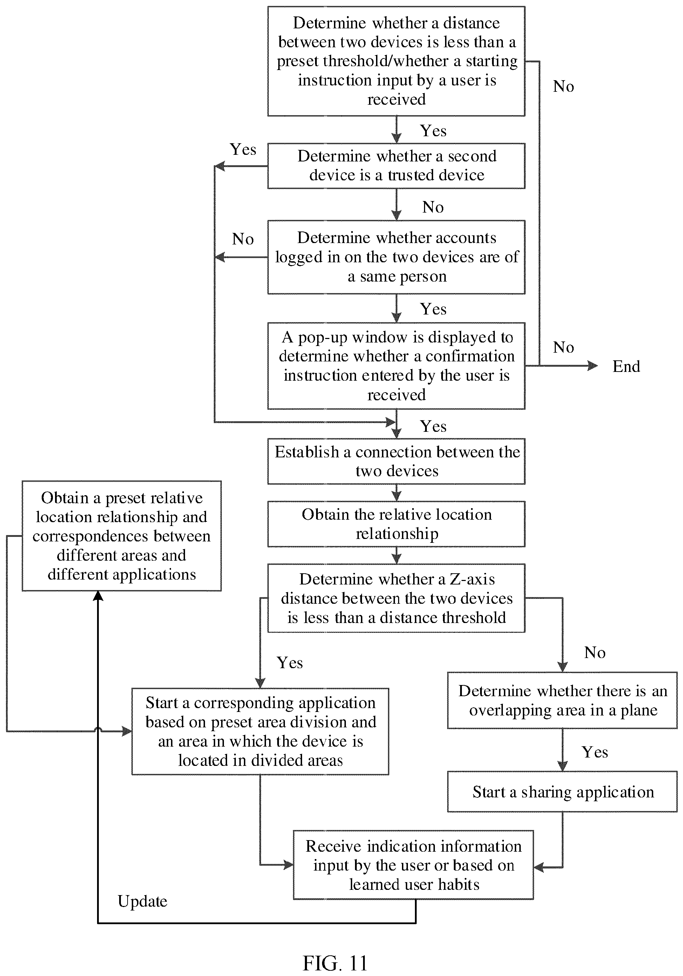

To explain this application more clearly, a complete embodiment is used herein to describe the technical solutions of this application in detail. For details, refer to FIG. 11. The embodiment includes the following steps.

When a first device may sense that the first device is close to a second device within a specific range, subsequent logic is started; alternatively, when a first device receives a starting instruction actively triggered by a user, a subsequent app starting policy is implemented.

The first device first determines whether the second device is a trusted device in a whitelist, and if the second device is a trusted device in the whitelist, verification succeeds.

If the second device is not a trusted device determined by the first device, the first device further determines whether accounts logged in on the two devices are of a same person, and if the accounts logged in on the two devices are of a same person, a connection may be established. Certainly, the foregoing proximity sensing may also be implemented by the second device, that is, the second device perceives the first device. This is not limited in this embodiment of this application.

If accounts logged in on the two devices are not of a same person, a dialog box is selected to pop up on the first device or the second device, to remind the user whether a connection needs to be established.

If the user confirms to establish a connection, verification succeeds.

The first device or the second device obtains a relative location relationship between the two devices by using a UWB method. When a Z-axis distance between the two terminal devices is less than or equal to a distance threshold, it may be determined that the two terminal devices are basically on a same plane. In this case, based on an area in which the first device is located in areas divided by the second device, a corresponding app is started.

When a Z-axis distance between the two devices is greater than the distance threshold, it may be determined that the two devices are not on a same plane. In this case, it may be further determined whether projections of the two devices overlap in a plane on which a screen of the second device is located. If the projections of the two devices overlap in the plane on which the screen of the second device is located, it may be determined that a sharing app is started.

The first device may further modify the app starting policy by accepting indication information entered by the user, or learn a usage habit and a preference of the user, to update the starting policy.

For technical principles and beneficial effects of this embodiment, refer to the description in the foregoing embodiment, and details are not described herein again.

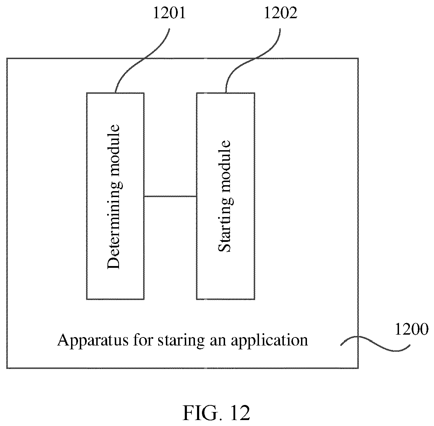

FIG. 12 is a schematic diagram of a structure of an apparatus for starting an app according to an embodiment of this application. An apparatus 1200 includes a determining module 1201 and a starting module 1202.

The determining module 1201 is configured to control a first device to determine a relative location relationship between the first device and a second device.

The starting module 1202 is configured to control the first device to start a target application app based on the relative location relationship.

Optionally, a plane on which a screen of the second device is located is an XOY plane. When the relative location relationship is a first relative location relationship, the target app is an app other than a file transfer app, and the first relative location relationship includes: A Z-axis distance between the first device and the second device is less than or equal to a distance threshold; or when the relative location relationship is a second relative location relationship, the target app is a file transfer app, and the second relative location relationship includes: A Z-axis distance between the first device and the second device is greater than the distance threshold.

Optionally, the second device includes a long side and a short side, and the first relative location relationship further includes: The first device approaches the second device from the short side; and the target app includes: a screen extension app, a projection app, or a mouse app.

Optionally, the second device includes a long side and a short side, and the first relative location relationship further includes: The first device approaches the second device from the long side; and the target app includes: a keyboard app or a touchpad app.

Optionally, the first relative location relationship further includes: There is an overlapping area between a projection of the first device on the XOY plane and the second device; and the target app includes a wireless charging app.

Optionally, the second relative location relationship further includes: There is an overlapping area between a projection of the first device on the XOY plane and the second device.

Optionally, the apparatus 1200 further includes a verification module, configured to control the first device to verify security of the second device. The starting module 1202 is specifically configured to control the first device to start a target app based on a relative location relationship when the security verification on the second device succeeds.

Optionally, the apparatus 1200 further includes an obtaining module, configured to control the first device to obtain indication information entered by a user. The indication information is used to indicate a correspondence between a relative location relationship and a target app. The starting module 1202 is specifically configured to control the first device to start a target app based on the relative location relationship and the indication information.

Optionally, the apparatus 1200 further includes a learning module, configured to control the first device to learn the correspondence between the relative location relationship and the target app based on the indication information.

Optionally, the starting module 1202 is specifically configured to control the first device to start the target app based on the relative location relationship between the first device and the second device and a relative location relationship between the first device and a third device.

Optionally, the determining module 1201 is specifically configured to control the first device to determine the relative location relationship between the first device and the second device by using an ultra wideband UWB technology.

For a specific manner in which the apparatus 1200 performs the method for starting an application and generated beneficial effects, refer to the related description in the method embodiments.

An embodiment of this application further provides an electronic device, including the foregoing processor. The electronic device provided in this embodiment may be the terminal device 100 shown in FIG. 1, and is configured to perform the foregoing method for starting an application. When an integrated unit is used, the terminal device may include a processing module, a storage module, and a communication module. The processing module may be configured to control and manage actions of the terminal device, for example, may be configured to support the terminal device in performing steps performed by a display unit, a detection unit, and a processing unit. The storage module may be configured to support the terminal device in storing program code, data, and the like. The communication module may be configured to support communication between the terminal device and another device.

The processing module may be a processor or a controller. The processing module may implement or execute various example logical blocks, modules, and circuits described with reference to content disclosed in this application. The processor may alternatively be a combination of processors implementing a computing function, for example, a combination of one or more microprocessors or a combination of a digital signal processor (digital signal processor, DSP) and a microprocessor. The storage module may be a memory. The communication module may be specifically a device that interacts with another terminal device, such as a radio frequency circuit, a Bluetooth chip, or a Wi-Fi chip.

In an embodiment, when the processing module is a processor, and the storage module is a memory, the terminal device in this embodiment may be a device having the structure shown in FIG. 1.

An embodiment of this application further provides a computer-readable storage medium, where the computer-readable storage medium stores a computer program. When the computer program is executed by a processor, the processor is enabled to perform the method for starting an application in the foregoing embodiments.

An embodiment of this application further provides a computer program product. When the computer program product is run on a computer, the computer is enabled to perform the foregoing related steps, to implement the method for starting an application in the foregoing embodiments.

The electronic device, the computer-readable storage medium, the computer program product, or the chip provided in embodiments is configured to perform the corresponding method provided above. Therefore, for beneficial effects that can be achieved, refer to the beneficial effects of the corresponding method provided above. Details are not described herein again.

In the several embodiments provided in this application, it should be understood that the disclosed apparatus and method may be implemented in other manners. For example, the described apparatus embodiment is merely an example. For example, division into the modules or the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, function units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

**Claims**

1. A method for starting an application, wherein the method comprises:

   determining (S310), by a first device, a relative location relationship between the first device and a second device; wherein the relative location relationship comprises a distance or an included angle between the first device and the second device in a spatial coordinate system, or different location areas divided based on the distance and the included angle; and
   starting (S320), by the first device, a target application, app, based on the relative location relationship;

   **characterized in that** a plane on which a screen of the second device is located is an XOY plane; and
   when the relative location relationship is a first relative location relationship, the target app is an app other than a file transfer app, and the first relative location relationship comprises that a Z-axis distance between the first device and the second device is less than or equal to a distance threshold; and
   when the relative location relationship is a second relative location relationship, the target app is a file transfer app, and the second relative location relationship comprises that a Z-axis distance between the first device and the second device is greater than the distance threshold.

2. The method according to claim 1, wherein the second device comprises a long side and a short side;

   the first relative location relationship further comprises that the first device approaches the second device from the short side; wherein the target app comprises: a screen extension app, a projection app, or a mouse app; or
   the first relative location relationship further comprises that the first device approaches the second device from the long side; wherein the target app comprises: a keyboard app or a touchpad app.

3. The method according to claim 1, wherein the first relative location relationship further comprises that there is an overlapping area between a projection of the first device on the XOY plane and the second device; and the target app comprises a wireless charging app.

4. The method according to claim 1, wherein the second relative location relationship further comprises that there is an overlapping area between a projection of the first device on the XOY plane and the second device.

5. The method according to any one of claims 1 to 4, wherein
   the method further comprises:

   obtaining, by the first device, indication information entered by a user, wherein the indication information is used to indicate a correspondence between the relative location relationship and the target app; and
   the starting, by the first device, a target app based on the relative location relationship comprises:
   starting, by the first device, the target app based on the relative location relationship and the indication information.

6. An apparatus (1200) for starting an application, comprising:

   a determining module (1201), configured to control a first device to determine a relative location relationship between the first device and a second device; wherein the relative location relationship comprises a distance or an included angle between the first device and the second device in a spatial coordinate system, or different location areas divided based on the distance and the included angle; and

a starting module (S1202), configured to control the first device to start a target application, app, based on the relative location relationship; **characterized in that** a plane on which a screen of the second device is located is an XOY plane; and

when the relative location relationship is a first relative location relationship, the target app is an app other than a file transfer app, and the first relative location relationship comprises that a Z-axis distance between the first device and the second device is less than or equal to a distance threshold; and

when the relative location relationship is a second relative location relationship, the target app is a file transfer app, and the second relative location relationship comprises that a Z-axis distance between the first device and the second device is greater than the distance threshold.

7. The apparatus (1200) according to claim 6, wherein the second device comprises a long side and a short side;

the first relative location relationship further comprises that the first device approaches the second device from the short side, wherein the target app comprises: a screen extension app, a projection app, or a mouse app; or

the first relative location relationship further comprises that the first device approaches the second device from the long side, wherein the target app comprises: a keyboard app or a touchpad app.

8. The apparatus (1200) according to claim 6, wherein the first relative location relationship further comprises that there is an overlapping area between a projection of the first device on the XOY plane and the second device; and the target app comprises a wireless charging app.

9. The apparatus (1200) according to claim 6, wherein the second relative location relationship further comprises that there is an overlapping area between a projection of the first device on the XOY plane and the second device.

10. The apparatus (1200) according to any one of claims 6 to 9, wherein

the apparatus (1200) further comprises a verification module, configured to control the first device to verify security of the second device; and

the starting module is specifically configured to control the first device to start the target app based on the relative location relationship when security verification on the second device succeeds.

11. The apparatus (1200) according to any one of claims 6 to 10, wherein

the apparatus (1200) further comprises an obtaining module, configured to control the first device to obtain indication information entered by a user, wherein the indication information is used to indicate a correspondence between the relative location relationship and the target app; and

the starting module is specifically configured to control the first device to start the target app based on the relative location relationship and the indication information.

12. An electronic device (100), comprising a processor (110), a memory (121), and an interface (195, 120, 130), wherein

the processor (110), the memory (121), and the interface (195, 120, 120) cooperate with each other, and the processor (110) is configured to perform the method according to any one of claims 1 to 5.

13. A computer-readable storage medium, wherein the computer-readable storage medium comprises computer instructions, and when the computer instructions are run on an electronic device or a server, the method according to any one of claims 1 to 5 is implemented.

**Patentansprüche**

1. Verfahren zum Starten einer Anwendung, wobei das Verfahren Folgendes umfasst:

Bestimmen (S310) einer relativen Lagebeziehung zwischen einer ersten Vorrichtung und einer zweiten Vorrichtung durch die erste Vorrichtung; wobei die relative Lagebeziehung einen Abstand oder einen zwischen der ersten Vorrichtung und der zweiten Vorrichtung eingeschlossenen Winkel in einem räumlichen Koordinatensystem oder verschiedene Lagebereiche, die basierend auf dem Abstand und dem eingeschlossenen Winkel geteilt sind, umfasst; und

Starten (S320) einer Zielanwendung (Ziel-App) durch die erste Vorrichtung basierend auf der relativen Lagebeziehung;

**dadurch gekennzeichnet, dass** eine Ebene, auf der sich ein Bildschirm der zweiten Vorrichtung befindet, eine XOY-Ebene ist; und

wenn es sich bei der relativen Lagebeziehung um eine erste relative Lagebeziehung handelt, die Ziel-App eine andere App als eine Dateiübertragungs-App ist und die erste relative Lagebeziehung umfasst, dass ein Abstand entlang der Z-Achse zwischen der ersten Vorrichtung und der zweiten Vorrichtung kleiner oder gleich einem Abstandsschwellenwert ist; und

wenn es sich bei der relativen Lagebeziehung um eine zweite relative Lagebeziehung handelt, die Ziel-App eine Dateiübertragungs-App ist und die zweite relative Lagebeziehung umfasst, dass ein Abstand entlang der Z-Achse zwischen der ersten Vorrichtung und der zweiten Vorrichtung größer als der Abstandsschwellenwert ist.

2. Verfahren nach Anspruch 1, wobei die zweite Vorrichtung eine lange Seite und eine kurze Seite umfasst;

die erste relative Lagebeziehung ferner umfasst, dass sich die erste Vorrichtung der zweiten Vorrichtung von der kurzen Seite her nähert; wobei die Ziel-App Folgendes umfasst: eine Bildschirmerweiterungs-App, eine Projektions-App oder eine Maus-App; oder

die erste relative Lagebeziehung ferner umfasst, dass sich die erste Vorrichtung der zweiten Vorrichtung von der Längsseite her nähert; wobei die Ziel-App Folgendes umfasst: eine Tastatur-App oder eine Touchpad-App.

3. Verfahren nach Anspruch 1, wobei die erste relative Lagebeziehung ferner umfasst, dass zwischen einer Projektion der ersten Vorrichtung auf die XOY-Ebene und der zweiten Vorrichtung ein Überlappungsbereich vorliegt; und die Ziel-App eine App für drahtloses Laden umfasst.

4. Verfahren nach Anspruch 1, wobei die zweite relative Lagebeziehung ferner umfasst, dass zwischen einer Projektion der ersten Vorrichtung auf die XOY-Ebene und der zweiten Vorrichtung ein Überlappungsbereich vorliegt.

5. Verfahren nach einem der Ansprüche 1 bis 4, wobei das Verfahren ferner Folgendes umfasst:

Beziehen von durch einen Benutzer eingegebenen Angabeinformationen durch die erste Vorrichtung, wobei die Angabeinformationen dazu verwendet werden, eine Entsprechung zwischen der relativen Lagebeziehung und der Ziel-App anzugeben; und

das Starten einer Ziel-App durch die erste Vorrichtung basierend auf der relativen Lagebeziehung Folgendes umfasst:

Starten der Ziel-App durch die erste Vorrichtung basierend auf der relativen Lagebeziehung und den Angabeinformationen.

6. Vorrichtung (1200) zum Starten einer Anwendung, die Folgendes umfasst:

ein Bestimmungsmodul (1201), das dazu konfiguriert ist, eine erste Vorrichtung derart zu steuern, dass sie eine relative Lagebeziehung zwischen der ersten Vorrichtung und einer zweiten Vorrichtung bestimmt; wobei die relative Lagebeziehung einen Abstand oder einen zwischen der ersten Vorrichtung und der zweiten Vorrichtung eingeschlossenen Winkel in einem räumlichen Koordinatensystem oder verschiedene Lagebereiche, die basierend auf dem Abstand und dem eingeschlossenen Winkel geteilt sind, umfasst; und

ein Startmodul (S1202), das dazu konfiguriert ist, die erste Vorrichtung derart zu steuern, dass sie basierend auf der relativen Lagebeziehung eine Zielanwendung (Ziel-App) startet; **dadurch gekennzeichnet, dass** eine Ebene, auf der sich ein Bildschirm der zweiten Vorrichtung befindet, eine XOY-Ebene ist; und

wenn es sich bei der relativen Lagebeziehung um eine erste relative Lagebeziehung handelt, die Ziel-App eine andere App als eine Dateiübertragungs-App ist und die erste relative Lagebeziehung umfasst, dass ein Abstand entlang der Z-Achse zwischen der ersten Vorrichtung und der zweiten Vorrichtung kleiner oder gleich einem Abstandsschwellenwert ist; und

wenn es sich bei der relativen Lagebeziehung um eine zweite relative Lagebeziehung handelt, die Ziel-App eine Dateiübertragungs-App ist und die zweite relative Lagebeziehung umfasst, dass ein Abstand entlang der Z-Achse zwischen der ersten Vorrichtung und der zweiten Vorrichtung größer als der Abstandsschwellenwert ist.

7. Vorrichtung (1200) nach Anspruch 6, wobei die zweite Vorrichtung eine lange Seite und eine kurze Seite umfasst;

die erste relative Lagebeziehung ferner umfasst, dass sich die erste Vorrichtung der zweiten Vorrichtung von der kurzen Seite her nähert, wobei die Ziel-App Folgendes umfasst: eine Bildschirmerweiterungs-App, eine Projektions-App oder eine Maus-App; oder

die erste relative Lagebeziehung ferner umfasst, dass sich die erste Vorrichtung der zweiten Vorrichtung von der Längsseite her nähert, wobei die Ziel-App Folgendes umfasst: eine Tastatur-App oder eine Touchpad-App.

8. Vorrichtung (1200) nach Anspruch 6, wobei die erste relative Lagebeziehung ferner umfasst, dass zwischen einer Projektion der ersten Vorrichtung auf die XOY-Ebene und der zweiten Vorrichtung ein Überlappungsbereich vorliegt; und die Ziel-App eine App für drahtloses Laden umfasst.

9. Vorrichtung (1200) nach Anspruch 6, wobei die zweite relative Lagebeziehung ferner umfasst, dass zwischen einer Projektion der ersten Vorrichtung auf die XOY-Ebene und der zweiten Vorrichtung ein Überlappungsbereich vorliegt.

10. Vorrichtung (1200) nach einem der Ansprüche 6 bis 9, wobei die Vorrichtung (1200) ferner ein Prüfmodul umfasst, das dazu konfiguriert ist, die erste Vorrichtung derart zu steuern, dass sie die Sicherheit der zweiten Vorrichtung prüft; und das Startmodul insbesondere dazu konfiguriert ist, die erste Vorrichtung derart zu steuern, dass sie die Ziel-App basierend auf der relativen Lagebeziehung startet, wenn die Sicherheitsprüfung auf der zweiten Vorrichtung erfolgreich ist.

11. Vorrichtung (1200) nach einem der Ansprüche 6 bis 10, wobei die Vorrichtung (1200) ferner ein Beziehmodul umfasst, das dazu konfiguriert ist, die erste Vorrichtung derart zu steuern, dass sie durch einen Benutzer eingegebene Angabeinformationen bezieht, wobei die Angabeinformationen dazu verwendet werden, eine Entsprechung zwischen der relativen Lagebeziehung und der Ziel-App anzugeben; und das Startmodul insbesondere dazu konfiguriert ist, die erste Vorrichtung derart zu steuern, dass sie die Ziel-App basierend auf der relativen Lagebeziehung und den Angabeinformationen startet.

12. Elektronische Vorrichtung (100), die einen Prozessor (110), einen Speicher (121) und eine Schnittstelle (195, 120, 130) umfasst, wobei der Prozessor (110), der Speicher (121) und die Schnittstelle (195, 120, 120) zusammenarbeiten und der Prozessor (110) dazu konfiguriert ist, das Verfahren nach einem der Ansprüche 1 bis 5 durchzuführen.

13. Computerlesbares Speichermedium, wobei das computerlesbare Speichermedium Computeranweisungen umfasst, und wenn die Computeranweisungen auf einer elektronischen Vorrichtung oder einem Server ausgeführt werden, das Verfahren nach einem der Ansprüche 1 bis 5 implementiert wird.

**Revendications**

1. Procédé de lancement d'une application, dans lequel le procédé comprend :

la détermination (S310), par un premier dispositif, d'une relation de localisation relative entre le premier dispositif et un second dispositif ; dans lequel la relation de localisation relative comprend une distance ou un angle inclus entre le premier dispositif et le second dispositif dans un système de coordonnées spatiales, ou différentes zones de localisation délimitées sur la base de la distance et de l'angle inclus ; et le lancement (S320), par le premier dispositif, d'une application cible sur la base de la relation de localisation relative ; **caractérisé en ce que** le plan sur lequel est situé un écran du second dispositif est un plan XOY ; et lorsque la relation de localisation relative est une première relation de localisation relative, l'application cible est une application autre qu'une application de transfert de fichiers, et la première relation de localisation relative comprend le fait qu'une distance sur l'axe Z entre le premier dispositif et le second dispositif est inférieure ou égale à un seuil de distance ; et lorsque la relation de localisation relative est une seconde relation de localisation relative, l'application cible est une application de transfert de fichiers, et la seconde relation de localisation relative comprend le fait qu'une distance sur l'axe Z entre le premier dispositif et le second dispositif est supérieure à un seuil de distance.

2. Procédé selon la revendication 1, dans lequel le second dispositif comprend un côté long et un côté court ;

la première relation de localisation relative comprend également le fait que le premier dispositif s'approche du second dispositif par son côté court ; dans lequel l'application cible comprend : une application d'extension d'écran, une application de projection ou une application de souris ; ou la première relation de localisation relative comprend également le fait que le premier dispositif s'approche du second dispositif par son côté long ; dans lequel l'application cible comprend : une application clavier ou une application pavé tactile.

3. Procédé selon la revendication 1, dans lequel la première relation de localisation relative comprend également qu'il existe une zone de chevauchement entre une projection du premier dispositif sur le plan XOY et le second dispositif ; et l'application cible comprend une application de recharge sans fil.

4. Procédé selon la revendication 1, dans lequel la seconde relation de localisation relative comprend également le fait qu'il existe une zone de chevauchement entre une projection du premier dispositif sur le plan XOY et le second dispositif.

5. Procédé selon l'une quelconque des revendications 1 à 4, dans lequel
le procédé comprend également :

   l'obtention, par le premier dispositif, d'informations d'indication saisies par un utilisateur, dans lequel les informations d'indication sont utilisées pour indiquer une correspondance entre la relation de localisation relative et l'application cible ; et
   le lancement, par le premier dispositif, d'une application cible sur la base de la relation de localisation relative comprend :
   le lancement, par le premier dispositif, de l'application cible sur la base de la relation de localisation relative et des informations d'indication.

6. Appareil (1200) pour le lancement d'une application, comprenant :

   un module de détermination (1201), configuré pour commander un premier dispositif afin de déterminer une relation de localisation relative entre le premier dispositif et un second dispositif ; dans lequel la relation de localisation relative comprend une distance ou un angle inclus entre le premier dispositif et le second dispositif dans un système de coordonnées spatiales, ou différentes zones de localisation délimitées sur la base de la distance et de l'angle inclus ; et
   un module de lancement (S1202), configuré pour commander le premier dispositif à lancer une application cible sur la base de la relation de localisation relative ;
   **caractérisé en ce que** le plan sur lequel est situé un écran du second dispositif est un plan XOY ; et
   lorsque la relation de localisation relative est une première relation de localisation relative, l'application cible est une application autre qu'une application de transfert de fichiers, et la première relation de localisation relative comprend le fait qu'une distance sur l'axe Z entre le premier dispositif et le second dispositif est inférieure ou égale à un seuil de distance ; et
   lorsque la relation de localisation relative est une seconde relation de localisation relative, l'application cible est une application de transfert de fichiers, et la seconde relation de localisation relative comprend le fait qu'une distance sur l'axe Z entre le premier dispositif et le second dispositif est supérieure à un seuil de distance.

7. Appareil (1200) selon la revendication 6, dans lequel le second dispositif comprend un côté long et un côté court ;

   la première relation de localisation relative comprend également le fait que le premier dispositif s'approche du second dispositif par son côté court, dans lequel l'application cible comprend : une application d'extension d'écran, une application de projection ou une application de souris ; ou
   la première relation de localisation relative comprend également le fait que le premier dispositif s'approche du second dispositif par son côté long, dans lequel l'application cible comprend : une application clavier ou une application pavé tactile.

8. Appareil (1200) selon la revendication 6, dans lequel la première relation de localisation relative comprend également le fait qu'il existe une zone de chevauchement entre une projection du premier dispositif sur le plan XOY et le second dispositif ; et l'application cible comprend une application de recharge sans fil.

9. Appareil (1200) selon la revendication 6, dans lequel la seconde relation de localisation relative comprend également le fait qu'il existe une zone de chevauchement entre une projection du premier dispositif sur le plan XOY et le second dispositif.

10. Appareil (1200) selon l'une quelconque des revendications 6 à 9, dans lequel

   l'appareil (1200) comprend également un module de vérification, configuré pour commander le premier dispositif afin de vérifier la sécurité du second dispositif ; et
   le module de lancement est spécifiquement configuré pour commander le premier dispositif afin de lancer l'application cible sur la base de la relation de localisation relative lorsque la vérification de sécurité sur le second dispositif réussit.

11. Appareil (1200) selon l'une quelconque des revendications 6 à 10, dans lequel

   l'appareil (1200) comprend également un module d'acquisition, configuré pour commander le premier dispositif afin d'obtenir des informations d'indication saisies par un utilisateur, dans lequel les informations d'indication sont utilisées pour indiquer une correspondance entre la relation de localisation relative et l'application cible ; et
   le module de lancement est spécifiquement configuré pour commander le premier dispositif à lancer l'application cible sur la base de la relation de localisation relative et des informations d'indication.

12. Dispositif électronique (100), comprenant un processeur, (110), une mémoire (121), et une interface (195, 120, 130), dans lequel
le processeur (110), la mémoire (121) et l'interface (195, 120, 120) coopèrent entre eux, et le processeur (110) est configuré pour réaliser le procédé selon l'une quelconque des revendications 1 à 5.

13. Support de stockage lisible par ordinateur, dans lequel le support de stockage lisible par ordinateur comprend des instructions informatiques, et lorsque les instructions informatiques sont exécutées sur dispositif électronique ou un serveur, le procédé selon l'une quelconque des revendications 1 à 5 est mis en œuvre.

Terminal device 100

| Antenna 1 | Antenna 2 |
|---|---|

| Mobile communication module 2G/3G/4G/5G [150] | Wireless communication module BT/WLAN/GNSS/NFC/IR/FM [160] |
|---|---|

Speaker [170A]

Receiver [170B]

Microphone [170C]

Headset jack [170D]

Audio module [170]

Displays 1 to N [194]

Cameras 1 to N [193]

Indicator [192]

Motor [191]

Button [190]

Internal memory [121]

SIM card interfaces 1 to N [195]

External memory interface [120]

USB interface [130]

Charging input

Processor [110]

Charging management module [140]

Power management module [141]

Battery [142]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

FIG. 1

Application layer

Application | System service

Framework layer

Directional extension logic

Relative location perception module | Policy selection module

Hardware abstraction layer
Interface definition language layer

System library & runtime

Hardware abstraction layer | UWB library

Kernel (Linux) | UWB driver

FIG. 2

A first device determines a relative location relationship between the first device and a second device

S310

The first device starts a target application app based on the relative location relationship

S320

FIG. 3

Z axis

Y axis

Short side

XOY plane

O

X axis

Second device

Long side

FIG. 4

A scenario in which a first device approaches a second device
from the left or the right separately

A scenario in which a first device
approaches a second device from below, and
the first device is extended to be a keyboard

A scenario in which a first
device approaches a second
device from the lower right,
and the first device is extended
to be a mouse or a touchpad

A scenario in which a first device approaches a
second device from a direction of a screen of the
second device for file transferring

FIG. 5

FIG. 6

Triangle setting: may implement 360-degree AoA

Vertical plane plus antenna: may implement 3D AoA

Direction of an arrival wave at an anchor(front)

Direction of an arrival wave at an anchor (rear)

FIG. 7

FIG. 8

| Upper left | Above | Upper right |
| Left | Second device | Right |
| Lower left | Below | Lower right |

FIG. 9

FIG. 10

Determine whether a distance between two devices is less than a preset threshold/whether a starting instruction input by a user is received

No

Yes

Yes ← Determine whether a second device is a trusted device

No

No ← Determine whether accounts logged in on the two devices are of a same person

Yes

A pop-up window is displayed to determine whether a confirmation instruction entered by the user is received

No → End

Yes

Establish a connection between the two devices

Obtain a preset relative location relationship and correspondences between different areas and different applications

Obtain the relative location relationship

Determine whether a Z-axis distance between the two devices is less than a distance threshold

Yes

No

Start a corresponding application based on preset area division and an area in which the device is located in divided areas

Determine whether there is an overlapping area in a plane

Yes

Start a sharing application

Receive indication information input by the user or based on learned user habits

Update

FIG. 11

1201    1202

Determining module

Starting module

Apparatus for staring an application    1200

FIG. 12

**EP 4 184 298 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020106877 A1
- CN 103138808 A